# FASCICULE DE BREVET EUROPEEN

(11) **EP 1 511 953 B1**
(45) Date de publication et mention de la délivrance du brevet: **09.03.2011**
(21) Numéro de dépôt: 03760006.1
(22) Date de dépôt: 11.06.2003
(51) Int. Cl.: F16J 15/12

(54) **JOINT D'ETANCHEITE EN GRAPHITE SOUPLE ET A GAINE METALLIQUE POUR HAUTE TEMPERATURE**
FLEXIBLE GRAPHITDICHTUNG MIT METALLMANTEL FÜR HOHE TEMPERATUREN
FLEXIBLE GRAPHITE SEALING JOINT WITH METAL JACKET FOR HIGH TEMPERATURE

(30) Priorité: 13.06.2002 FR 0207260
(43) Date de publication de la demande: 09.03.2005
(73) Titulaire: Commissariat à l'Énergie Atomique et aux Énergies Alternatives, 75015 Paris (FR); Garlock France SAS, 42029 Saint Etienne Cédex (FR)
(72) Inventeur: CAPLAIN, Philippe, F-26130 SAINT-PAUL TROIS CHATEAUX (FR); ROUAUD, Christian, F-07700 BOURG SAINT-ANDEOL (FR); LE GALLO, Patrick, F-38560 JARRIE (FR); LE GUYADEC, Fabienne, F-26130 SAINT-PAUL TROIS CHATEAUX (FR); LEFRANCOIS, Michel, F-42000 SAINT-ETIENNE (FR); GENTZBITTEL, Jean-Marie, F-38171 SEYSSINET-PARISET (FR); LEVOY, Richard, F-26230 REAUVILLE (FR)
(74) Mandataire: Poulin, Gérard
(86) Numéro de dépôt international: PCT/FR2003/001740
(87) Numéro de publication internationale: WO 2003/106869

(56) Documents cités:
- GB-A- 2 069 631

## Description

### Domaine de l'invention

L'invention se rapporte au domaine de l'étanchéité statique, notamment pour des brides de tuyauterie susceptibles de véhiculer des fluides à très hautes températures.

Un joint de ce domaine est connu de GB 2069631.

### Art antérieur et problème posé

En référence aux figures 1, 2, 3, 4 et 5, on connaît plusieurs types de joint d'étanchéité utilisant plusieurs matériaux, tels que le métal et le graphite.

La figure 1 montre un premier type de joint, dit « strié », ou une âme métallique 1B, est entourée de deux minces couches de graphite 1A. L'âme métallique 1B a des stries sur sa surface pour que les couches de graphite 1A puissent pénétrer légèrement dans l'âme métallique 1B, afin d'aboutir au serrage du joint.

La figure 2 montre un deuxième type de joint, dit « ondulé », où une couche centrale de métal 2B de forme ondulée est recouverte sur ses deux surfaces d'une couche de graphite 2A épousant également la forme ondulée.

La figure 3 montre un troisième type de joint, dit « spiralé », où une spirale de graphite 3A est enroulée conjointement avec une spirale de métal 3B.

La figure 4 montre un quatrième type de joint, dit « métalloplastique »,où l'âme centrale 4A est en graphite et est entourée d'une enveloppe en métal 4B, en deux parties.

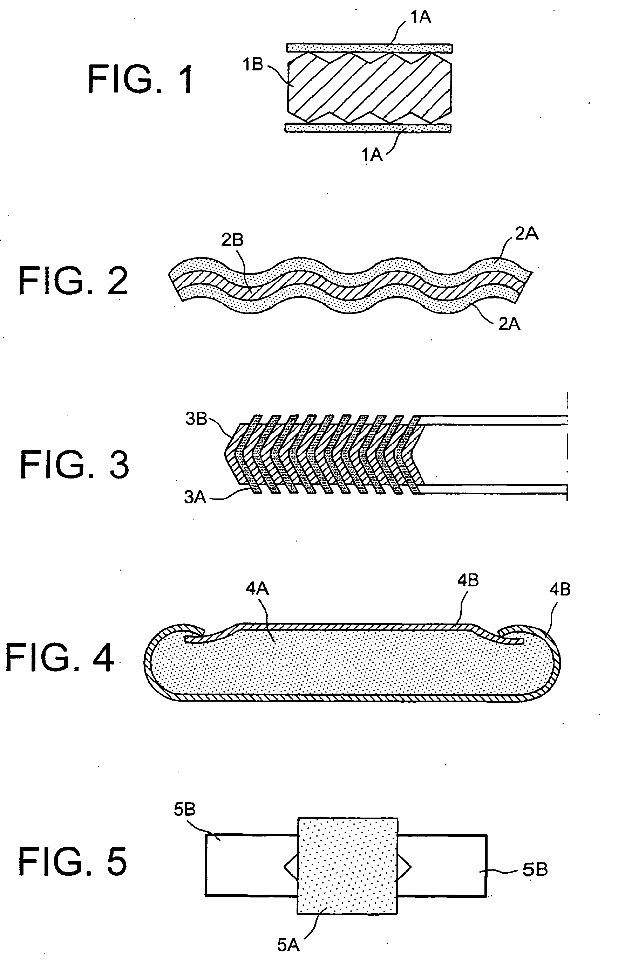

Enfin, un cinquième type de joint est représenté à la figure 5. Il s'agit d'un joint « tout graphite », ou une âme centrale 5A de section carrée ou rectangulaire est entourée de chaque côté de deux anneaux métalliques massifs 5B.

Dans tous ces types de joints métalloplastiques, l'amiante a cédé progressivement sa place au graphite souple, appelé également « graphite expansé ». Celui-ci est utilisé directement comme matériau d'étanchéité, c'est-à-dire qu'il est en contact direct avec les éléments entre lesquels on doit assurer l'étanchéité, à savoir des brides. C'est le cas par exemple des joints spiralés, ondulés et striés avec un garnissage. Il est également utilisé indirectement comme élément de garnissage, notamment avec les joints métalloplastiques.

Le remplacement de l'amiante par le graphite n'a cependant pas résolu un problème concernant la dispersion des performances observée avec ces joints, dits « composites », c'est-à-dire associant du graphite et du métal. C'est pourquoi, dans des applications très sévères, le joint « tout graphite » s'est rapidement imposé, car, non seulement, on observe une très grande reproductibilité de ses performances, mais il autorise également le contact métal/métal entre les brides sur les anneaux qui délimitent le volume occupé par le graphite.

Les limites d'utilisation de ces nouveaux joints en graphite matricés sont donc liées étroitement à celles du matériau lui-même, c'est-à-dire le graphite souple. Or, le paramètre essentiel caractérisant le graphite expansé est son degré de pureté, c'est-à-dire son taux de cendres maximum. Les risques de corrosion et la vitesse d'oxydation sont donc liés à cet indice de pureté, de sorte qu'il est couramment admis une température limite de 550°C pour les graphites les plus purs, en présence d'oxygène.

Le but de l'invention est de remédier à cet inconvénient en proposant un type différent de joint utilisant le graphite et le métal et pouvant résister à des températures supérieures à 550°C.

### Résumé de l'invention

A cet effet, l'objet principal de l'invention est un joint d'étanchéité en graphite souple à enveloppe métallique pour haute température, comprenant, entre autre, une âme souple en graphite et une enveloppe métallique entourant l'âme souple.

Selon l'invention, cet ensemble constitué de l'âme souple entourée de l'enveloppe métallique est lui-même enfermé dans une gaine fermée de façon hermétique, de manière à ce que cet ensemble enfermé puisse travailler sous une atmosphère contrôlée. En effet, il a été remarqué que, en atmosphère inerte, c'est-à-dire sans oxygène, la température de fonctionnement du graphite peut monter à 2 000°C, sans altérer ses propriétés physiques. De plus, l'enveloppe métallique est avantageusement réalisée en deux coupelles (dénommées « demi-enveloppes » dans les revendications) n'entourant pas complètement l'âme souple.

Pour cette raison, une première réalisation de l'invention prévoit de faire régner un vide partiel à l'intérieur de la gaine.

Dans une autre réalisation envisagée, on met un gaz neutre à l'intérieur de la gaine.

De préférence, on utilise du graphite souple pour constituer l'âme souple.

Dans la réalisation principale, il est prévu que la gaine soit métallique.

Du point de vue de sa forme, la gaine peut être, dans une première réalisation, en deux parties soudées dans un plan médian du joint.

Dans une seconde réalisation, la gaine est peut être réalisée, toujours en deux parties, les soudures étant sur des arêtes opposées, quand la section de la gaine est quadrilatérale.

Enfin, une troisième réalisation de la gaine prévoit que celle-ci est en quatre parties, dont deux latérales, une supérieure et une inférieure, toutes soudées entre elles.

La gaine a de préférence une section carrée ou une section rectangulaire.

Il est intéressant de prévoir que les coupelles aient des saillies sur les côtés où la gaine doit être sollicitée lors du serrage du joint.

### Liste des figures

L'invention et ses différentes caractéristiques techniques seront mieux comprises à la lecture de la description suivante, accompagnée de plusieurs figures dont les premières sont déjà décrites.

Ces figures représentent respectivement :
- figure 1, en coupe, un premier type de joint, dit « strié », de l'art antérieur ;
- figure 2, en coupe, un deuxième type de joint, dit « ondulé », de l'art antérieur ;
- figure 3, en coupe, un troisième type de joint, dit « spiralé », de l'art antérieur ;
- figure 4, en coupe, un quatrième type de joint, dit « métalloplastique », de l'art antérieur ;
- figure 5, en coupe, un cinquième type de joint, dit « tout graphite », de l'art antérieur ;

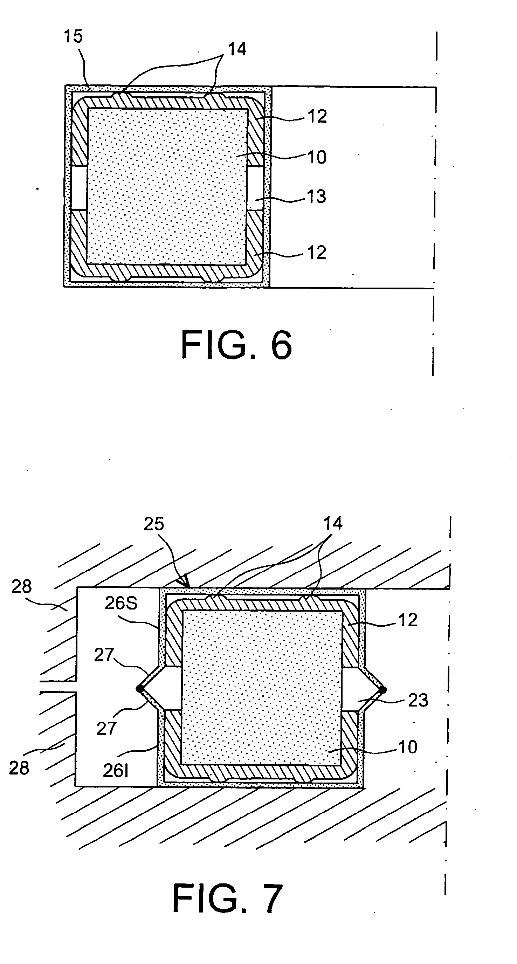

- figure 6, en coupe, une première réalisation du joint selon l'invention ;
- figure 7, en coupe, une deuxième réalisation du joint selon l'invention ;

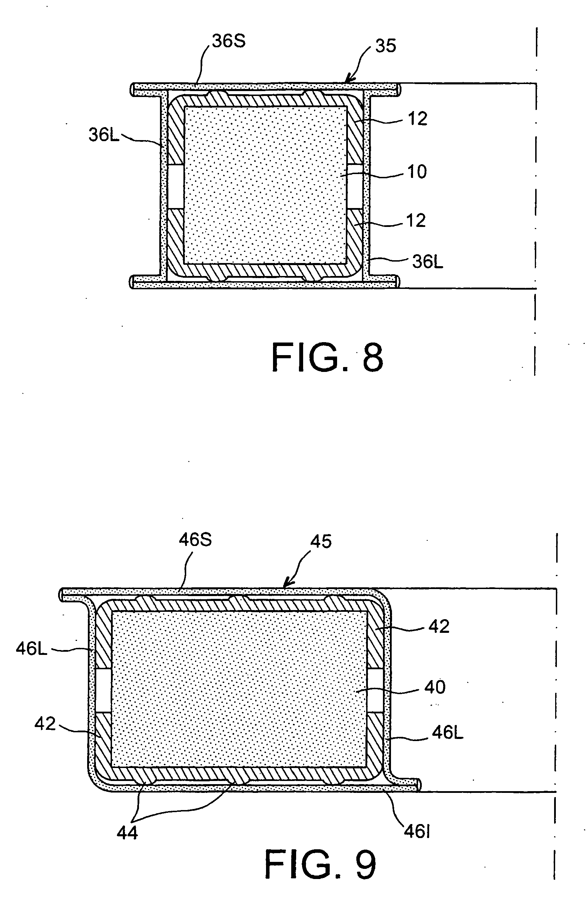

- figure 8, en coupe, une troisième réalisation du joint selon l'invention ; et
- figure 9, en coupe, une quatrième réalisation du joint selon l'invention.

### Description détaillée de quatre réalisations de l'invention

En référence à la figure 6, le joint d'étanchéité selon l'invention est donc un joint composite associant une âme souple 10, interne, constituée de graphite expansé ou d'un matériau sensiblement équivalent. On précise que le graphite expansé, pour garder ses propriétés élastiques au-delà de 550°C, doit être maintenu sous atmosphère exempte d'oxygène. C'est pourquoi, selon l'invention, on réalise une gaine 15 hermétiquement fermée en deux ou quatre parties soudées dans un plan médian du joint (non représentées en figure 6), de manière à empêcher toute migration de gaz corrosif vers le graphite. On prévoit éventuellement de pouvoir extraire l'oxygène si nécessaire et de le remplacer par un gaz neutre, tel que l'argon, par exemple.

Ainsi, la gaine 15 constitue une boîte métallique qui s'oppose à tout transfert de gaz de l'extérieur de cette boîte ainsi constituée vers son intérieur, et réciproquement. L'âme souple 10 en graphite expansé est conditionnée entre les deux coupelles métalliques 12 constituant l'enveloppe métallique, le volume de cette âme étant ainsi délimité pour éviter toute extrusion du graphite, lors de sa densification pendant la compression, lors de la phase de serrage. On note qu'un espace 13 subsiste entre ces deux coupelles 12 avant serrage et qu'il se réduit au minimum en fin de serrage.

Les coupelles 12 possèdent, sur leurs surfaces qui sont en regard des parties de la gaine 15 qui doivent recevoir les pièces entre lesquelles l'étanchéité doit être établie, plusieurs saillies 14. Ceci permet en effet d'assurer une concentration de l'effort au niveau du contact entre le joint d'étanchéité et la portée de joint, c'est-à-dire la pièce à étancher. On contribue ainsi à maintenir l'étanchéité. Ces saillies 14 sont représentées sous forme de bossage arrondi, mais peuvent être également de section triangulaire ou rectangulaire. Leur hauteur est dimensionnée de manière à éviter le cisaillement de la gaine 15, lors du fonctionnement du joint à haute température.

L'enveloppe métallique constituée par les deux coupelles 12 est beaucoup plus rigide que la gaine 15 qui est elle aussi métallique. Lors de l'écrasement du joint, c'est-à-dire du rapprochement des deux pièces entre lesquelles l'étanchéité doit être assurée, le graphite souple de l'âme 10 diminue en volume en se densifiant et exerce donc une réaction globale croissante sur l'enveloppe 15. Cette réaction globale est concentrée sur les saillies 14 formées à l'extérieur des deux coupelles 12.

La figure 7 présente une deuxième réalisation du joint selon l'invention, celle-ci étant un peu plus complète. En effet, la gaine 25 est constituée de deux parties distinctes, une partie supérieure 26S et une partie inférieure 26I. Ces deux parties sont soudées dans un plein médian par leurs extrémités respectives 27 qui font saillie vers l'extérieur, en créant ainsi des lèvres flexibles, permettant de faciliter la réalisation des soudures et rendre également la gaine 25 plus souple, lors de la compression du joint. L'âme souple 10 et les coupelles 12 constituant l'enveloppe métallique sont identiques aux précédentes décrites à la figure 6.

La troisième réalisation représentée sur la figure 8 montre que la gaine 35 peut être composée des quatre parties qui sont une partie supérieure 36S, une partie inférieure 36I et deux parties latérales 36L. Ces quatre parties sont soudées deux par deux dans deux plans qui sont ceux des parois internes des parties supérieure 36S et inférieure 36I. L'âme souple 10 et les coupelles 12 peuvent arborer les mêmes formes que pour les réalisations précédentes.

La quatrième réalisation représentée par la figure 9 possède une âme souple 40 qui n'est plus carrée, mais est plutôt rectangulaire. Ceci a pour conséquence que les coupelles 42 sont un peu plus larges et possèdent un nombre plus important de saillies 44. Par contre, la gaine 45 est en deux parties, une supérieure 46S et une inférieure 46I possédant chacune un côté vertical 46L. Leurs soudures sont donc prévues sur des arêtes opposées de la forme rectangulaire de l'ensemble.

Du fait de leur application, les matériaux utilisés pour constituer la gaine métallique et les coupelles sont donc choisis en fonction de leur tenue en température et de leur résistance mécanique à chaud. La gaine doit être préférentiellement en alliage, à base de nickel ou à base de fer, du fait de l'aptitude de ces matériaux à former une couche de protection contre la corrosion à haute température qui peut être constituée d'un oxyde d'alumine ou d'un oxyde de chrome. Le matériau constituant les coupelles est d'un choix moins limité, puisqu'il est protégé de la corrosion par la gaine. Les alliages nickel/chrome/fer, d'usage courant, peuvent très bien être utilisés. D'autres matériaux, du type céramique, pourraient également être utilisés à des fins de réutilisation ou de durée de vie.

A titre d'exemple dimensionnel, pour un joint de diamètre moyen de 50 à 150 mm, on peut utiliser une section de graphite de 5 x 5 mm, associée à des coupelles de 0,5 mm d'épaisseur. L'épaisseur de la gaine doit être volontairement limitée à 0,10 ou 0,20 mm et, dans ce cas, la hauteur des saillies est respectivement égale à 0,05 ou 0,15 mm.

On comprend ainsi que, une fois enfermée, l'âme en graphite puisse garder ses propriétés efficaces sous haute température, une fois qu'elle est enfermée dans la gaine qui l'entoure.

## Revendications

1. Joint d'étanchéité à haute température en graphite souple et à enveloppe métallique comprenant :
- une âme en graphite souple (10, 40) ; et
- une enveloppe métallique (12, 42) entourant l'âme souple,
**caractérisé,**
- **en ce qu'**il comprend une gaine (15, 25, 35, 45) fermée de façon hermétique et à l'intérieur de laquelle est placé l'ensemble constitué de l'enveloppe (12, 42) et de l'âme souple (10, 40)
- **en ce que** la gaine (15, 25) est en deux on quatre parties soudées dans un plan médian du joint, et
- **en ce que** l'enveloppe métallique est en deux demi-enveloppes (12, 42) n'entourant pas complètement l'âme souple (10, 40).

2. Joint d'étanchéité selon la revendication 1, **caractérisé en ce que** l'intérieur de la gaine (15, 25, 35, 45) est maintenu sous vide relatif.

3. Joint d'étanchéité selon la revendication 1, **caractérisé en ce que** l'intérieur de la gaine (15, 25, 35, 45) est maintenu sous gaz neutre.

4. Joint d'étanchéité selon la revendication 1, **caractérisé en ce que** la gaine (15, 25, 35, 45) est métallique.

5. Joint d'étanchéité selon la revendication 1, **caractérisé en ce que** la gaine (35, 45) est en quatre parties, une partie supérieure (36S, 465), une partie inférieure (36I, 461) et deux parties latérales (36L, 46L) soudées entre elles.

6. Joint d'étanchéité selon la revendication 1, **caractérisé en ce que** la gaine (45) est en deux parties, une partie supérieure (46S) et une partie inférieure (461) soudées au niveau de deux arêtes opposées du quadrilatère formé par l'ensemble du joint.

7. Joint selon la revendication 1, **caractérisé en ce que** l'ensemble du joint est de section carrée.

8. Joint d'étanchéité selon la revendication 1, **caractérisé en ce que** l'ensemble du joint est de section rectangulaire.

9. Joint d'étanchéité selon la revendication 8, **caractérisé en ce que** les demi-enveloppes (12, 42) ont des saillies (14, 44) placées des côtés supérieurs et inférieurs du joint, c'est-à-dire des côtés destinés à recevoir les pièces entre lesquelles l'étanchéité doit être établie.

## Claims

1. Seal in flexible graphite with a metal envelope at high temperature including:
- A flexible core (10, 40); and
- A metal envelope (12, 42) surrounding the flexible core,
**Characterised**
- **by** the fact that it includes a sheath (15, 25, 35, 45) hermetically sealed inside of which is placed a unit composed of the envelope (12, 42) and the flexible core (10, 40)
- by the fact that the sheath (15, 25) is in two or four parts welded in a mid plane of the seal and
- by the fact that the metal envelope is in two cups (12, 42) not completely surrounding the flexible core (10, 40).

2. Seal according to claim 1, **characterised by** the fact that the inside of the sheath (15, 25, 35, 45) is maintained in a relative vacuum.

3. Seal according to claim 1 **characterised by** the fact that the inside of the sheath (15, 25, 35, 45) is maintained in neuter gas.

4. Seal according to claim 1, **characterised by** the fact that the sheath (15, 25, 35, 45) is metallic.

5. Seal according to claim 1 **characterised by** the fact that the sheath (35, 45) is in four parts, a higher part (36S, 46S), a lower part (361, 46I) and two lateral parts (36L, 46L) welded together.

6. Seal according to claim 1 **characterised by** the fact that the sheath (45) is in two parts, a higher part (46S) and a lower part (46I) welded at the level of two edges opposite the quadrilateral formed by the total seal.

7. Seal according to claim 1 **characterised by** the fact that the seal unit is of a square section.

8. Seal according to claim 1 **characterised by** the fact that the seal unit is of a rectangular section.

9. Seal according to claim 8 **characterised by** the fact that the cups (12, 42) have projections (14, 44) placed at upper and lower sides, that is sides which are intended for receiving the pieces between which the tightness must be established.

## Patentansprüche

1. Flexible Hochtemperatur-Graphitdichtung mit Metallmantel, umfassend:
- einen flexiblen Graphitkern (10, 40); und
- einen den flexiblen Graphitkern umgebenden Metallmantel (12, 42),
**dadurch gekennzeichnet,**
- **dass** sie eine hermetisch verschlossen Hülle (15, 25, 35, 45) umfasst, in deren Innern das aus der Hülle (12, 42) und dem flexiblen Kern (10, 40) bestehende Ganze untergebracht ist;
- **dass** die Hülle (15, 25) aus zwei oder vier in einher Mittelebene der Dichtung zusammengeschweißten Teilen besteht, und
- **dass** der Metallmantel aus zwei Halbmänteln (12, 42) besteht, die den flexiblen Kern (10, 40) nicht vollständig umgeben.

2. Dichtung nach Anspruch 1, **dadurch gekennzeichnet, dass** im Innern der Hülle (15, 25, 35, 45) ein relatives Vakuum aufrecht erhalten wird.

3. Dichtung nach Anspruch 1, **dadurch gekennzeichnet, dass** im Innern der Hülle (15, 25, 35, 45) eine Neutraigasatmosphäre herrscht.

4. Dichtung nach Anspruch 1, **dadurch gekennzeichnet, dass** die Hülle (15, 25, 35, 45) metallisch ist.

5. Dichtung nach Anspruch 1, **dadurch gekennzeichnet, dass** die Hülle (35, 45) aus vier miteinander verschweißten Teilen besteht, nämlich einem Oberteil (36S, 46S), einem Unterteil (36I, 46I) und zwei Seitenteilen (36L, 46L).

6. Dichtung nach Anspruch 1, **dadurch gekennzeichnet, dass** die Hülle (45) aus zwei Teilen besteht, einem Oberteil (46S) und einem Unterteil (46I), verschweißt an den beiden entgegengesetzten Kanten des viereckigen Querschnitts (quadrilatère) der Dichtung.

7. Dichtung nach Anspruch 1, **dadurch gekennzeichnet, dass** die gesamte Dichtung einen quadratischen Querschnitt aufweist.

8. Dichtung nach Anspruch 1, **dadurch gekennzeichnet, dass** die gesamte Dichtung einen rechteckigen Querschnitt aufweist.

9. Dichtung nach Anspruch 8, **dadurch gekennzeichnet, dass** die Halbmäntel (12, 42) Buckel (14, 44) haben, die sich auf der Ober- und der Unterseite der Dichtung befinden, das heißt auf den Seiten, die dazu bestimmt sind, die Teile bzw. Stücke aufzunehmen, zwischen denen die Dichtheit hergestellt werden muss.
